(19)

**Europäisches Patentamt**

**European Patent Office**

**Office européen des brevets**

(11)  **EP 4 632 678 A1**

(12)  # EUROPEAN PATENT APPLICATION

(43) Date of publication:
**15.10.2025  Bulletin 2025/42**

(21) Application number: **24169747.3**

(22) Date of filing: **11.04.2024**

(51) International Patent Classification (IPC):
*G06T 11/00* (2006.01)

(52) Cooperative Patent Classification (CPC):
**G06T 11/001**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Robert Bosch GmbH**
**70442 Stuttgart (DE)**

(72) Inventors:
• **Xing, Xiaoyan**
**1096CJ Amsterdam (NL)**

• **Karaoglu, Sezer**
**1087MC Amsterdam (NL)**
• **Gevers, Theo**
**1091HR Amsterdam (NL)**
• **Groh, Konrad**
**70193 Stuttgart (DE)**
• **Metzen, Jan Hendrik**
**71034 Boeblingen (DE)**
• **Hu, Tao**
**81543 München (DE)**

Remarks:
Amended claims in accordance with Rule 137(2)
EPC.

(54)  ## DEVICE AND METHOD FOR CONTROLLING AN ILLUMINATION IN A DIGITAL IMAGE

(57)  A method for controlling an illumination in a digital image, wherein the method comprises providing (202) target illumination properties that comprise the target brightnesses of pixels of the digital image, determining (204) the digital image that optimizes a first similarity metric that depends on the target illumination properties and on illumination properties that comprise the brightnesses of the pixels of the digital image.

Fig. 2

EP 4 632 678 A1

**Description**

Background

The invention relates to a device and a method for controlling an illumination in a digital image.

Generative models may be used to synthesize digital images from text prompts. Exemplary generative models are DALL-E, CLIP, CM3leon. These models have only limited control over the illumination of the digital image.

Renderer may be used to control the physics, in particular illumination, of a scene in the digital image. An example for a renderer is Blender.

Disclosure of the invention

The device and the method for controlling an illumination according to the independent claims combines physics-guided and training-free diffusion for controlling the illumination in a digital image.

The method generates photo-realistic illumination conditions under the proper illumination property guidance. The method is able to control the illumination of an original digital image or of a generated digital image. Controlling the illumination of the original digital image is referred to as performing illumination editing of the original digital image. An example of the illumination editing is adding a new illumination to the original digital image. An example of illumination editing is relighting, e.g., of a face depicted in the digital image.

Illumination is related to the brightness of a pixel of the digital image. Controlling the illumination is a manipulation of the low-level features of the digital image that define the illumination, i.e., the brightnesses of the pixels of the digital image.

The method is training-free and easily integrated with most pixel-based diffusion models. This enhances the illumination control capabilities of pixel-based diffusion models efficiently.

The method for controlling the illumination in a digital image, in particular for enhancing a training data set, comprises providing target illumination properties that comprise the target brightnesses of pixels of the digital image, determining the digital image that optimizes a first similarity metric that depends on the target illumination properties and on illumination properties that comprise the brightnesses of the pixels of the digital image.

To control the illumination conditions in a generated digital image or an original digital image, the first similarity metric comprises pixel-wise differences between the illumination properties and the target illumination properties, and wherein determining the digital image that optimizes the first similarity metric comprises determining the digital image that minimizes the sum of the pixel-wise differences.

To control the illumination conditions of the original digital image, the digital image comprises a first color channel and a second color channel, wherein the method comprises providing target geometry properties that comprise a target cross color ratio for the combination of the first color channel and the second color channel for a pair of pixels of the digital image, determining the digital image that optimizes a second similarity metric that depends on the target geometry properties and on geometry properties that comprise a cross color ratio for the combination of the first color channel and the second color channel of the digital image for the pair. This introduces geometry guidance.

The pair may comprise a first pixel and a second pixel, wherein the cross color ratio for the pair comprises, the product of a ratio of the intensity of the color of the first pixel in the first color channel and the intensity of the color of the second pixel in the first color channel, with a ratio of the intensity of the color of the first pixel in the second color channel and the intensity of the color of the second pixel in the second color channel.

The second similarity metric may comprise pixel-wise differences between the geometry properties and the target geometry properties of a plurality of pairs of pixels of the digital image, and wherein determining the digital image that optimizes the second similarity metric comprises determining the digital image that minimizes the sum of the pixel-wise differences of the second similarity metric.

The target geometry properties and the geometry properties may comprise the cross color ratios only for pairs of neighboring pixels of the digital image.

The digital image may comprise the first color channel, the second color channel, and a third color channel, wherein the target geometry properties and the geometry properties comprise the cross color ratios for the combination of the first color channel and the third color channel, and the combination of the second color channel and the third color channel.

For enhancing the training data set, the method may comprise providing a set of different target geometry properties, and generating different digital images with different target geometry properties from the set.

For enhancing the training data set, the method may comprise providing a set of different target illumination properties, and generating different digital images with different target illumination properties from the set.

The device for controlling the illumination in the digital image, in particular for enhancing the training data set comprises at least one processor and at least one storage, wherein the at least one storage stores instructions that are executable by the at least one processor, and that, when executed by the at least one processor, cause the device to execute the method.

A computer program for controlling an illumination in a digital image may comprise computer readable instructions that, when executed by a computer, cause the computer to execute the method.

Further embodiments are derived from the following description and the drawing. In the drawing:

Fig. 1 schematically depicts a device for controlling an illumination in a digital image,
Fig. 2 depicts a flow chart with steps of a first example of a method for controlling the illumination,
Fig. 3 depicts a flow chart with steps of a second example of the method for controlling the illumination.

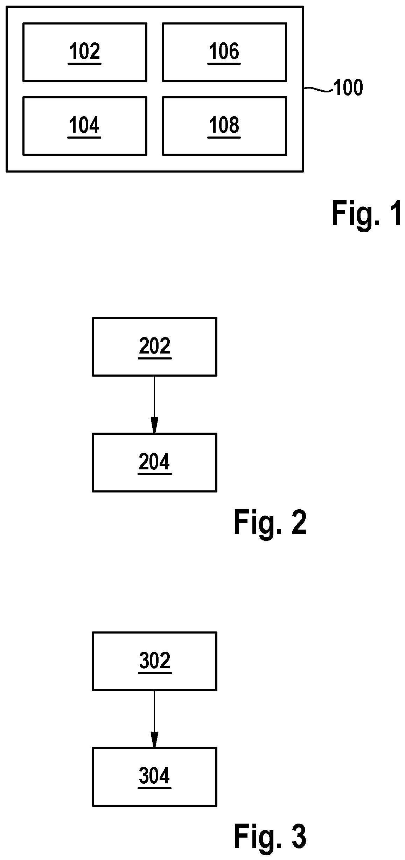

Figure 1 schematically depicts a device 100 for controlling an illumination in a digital image $x$.

The device 100 comprises at least one processor 102 and at least one storage 104. The device 100 may be a cellular phone.

The device 100 may comprise a sensor 106 that is configured for capturing an original digital image $x_0$. The sensor 106 is for example a camera or a receiver.

The device 100 may comprise an output 108 that is configured for outputting the digital image $x$. The output 108 is for example a display or a sender.

The at least one storage 104 stores instructions that are executable by the at least one processor 102.

When executed by the at least one processor 102, the instructions cause the device 100 to execute a method for controlling an illumination of the digital image x.

A computer program for controlling the illumination comprises computer readable instructions that, when executed by a computer, cause the computer to execute the method.

Diffusion models gradually perturb data using a forward diffusion process and then reverse the process to reconstruct the original data.

Let $q(x_0)$ denote an unknown data distribution in $\mathbb{R}^D$. The forward diffusion process, indexed by step t as $\{x_t\}_{t\in[0,\eta]}$, is succinctly represented by the following forward Stochastic Differential Equation (SDE):

$$dx = f(x,t)dt + g(t)dw$$

where $w \in \mathbb{R}^D$ is a standard Wiener process $f(\cdot,t): \mathbb{R}^D \to \mathbb{R}^D$ is the drift coefficient and $g(t) \in \mathbb{R}$ is the diffusion coefficient.

The $f(x,t)$ and $g(t)$ are related to the noise size and determine the perturbation kernel $q_{t|0}(x_t|x_0)$ from step 0 to step t.

Let $q_{t|0}(x)$ be the marginal distribution of the SDE at step t, the step-reversal is described by another SDE:

$$dx = [f(x,t)dt + g(t)^2 s(x,t)]dt + g(t)d\overline{w}$$

where $\overline{w}$ is a reverse-step standard Wiener process with dt as an infinitesimal negative step, and $s(x,t) = \nabla_x \log q_t(x)$ represents a score.

The score, similar to energy, allows to introduce an additional energy function $\varepsilon(\cdot,\cdot,\cdot)$ into the reverse SDE process for the specific guidance.

The method is described by way of example of two tasks.

According to a first example, the method controls the illumination conditions of a generated digital image. According to a second example, the method controls the illumination conditions of an original digital image.

To accomplish these tasks, the energy function in the diffusion process is reformulated. Then illumination guidance is introduced in the image synthesis with the diffusion model.

To accomplish the second task, additionally, geometry guidance is introduced.

Notably, this change to the diffusion model requires no further training, nor extra data labels or Computer Generated Imagery, CGI techniques.

The design of the energy function $\varepsilon$ is decomposed into the sum of two log potential functions:

$$\varepsilon(y,x,t) = \lambda_I \varepsilon_I(y,x,t) + \lambda_R \varepsilon_R(y,x,t)$$
$$= \lambda_I E_{q_{t|0}(x_t|x)} S_I(y,x,t) + \lambda_R E_{q_{t|0}(x_t|x)} S_R(y,x,t)$$

where $y$ is the target guidance for the respective energy $\varepsilon_I$, $\varepsilon_R$, where $\varepsilon_I(\cdot, \cdot, \cdot): \mathbb{R}^D \times \mathbb{R}^D \times \mathbb{R}^D \to \mathbb{R}$ is the log potential function provided for illumination-based guidance, and $\mathcal{E}_R(\cdot, \cdot, \cdot): \mathbb{R}^D \times \mathbb{R}^D \times \mathbb{R} \to \mathbb{R}$ is the log potential function provided for geometry-based guidance, $x_t$ is the perturbation source image in the forward SDE, and $q_{t|0}(x_t|x)$ is the perturbation kernel from step 0 to step t in the forward SDE. $S_I(y, x, t): \mathbb{R}^D \times \mathbb{R}^D \times \mathbb{R} \to$ is a function measuring a similarity between a target illumination guidance and perturbed source image. $S_R(y, x, t): \mathbb{R}^D \times \mathbb{R}^D \times \mathbb{R} \to$ is a function measuring a similarity between a target geometry guidance and perturbed source image. $\lambda_I$, $\lambda_R$ are weighting hyper-parameters that may be predetermined.

In the reverse process, adopting a step size of h, the iteration rule from s to t = s-h is as

$$x_t = x_s - \left[ f(x, s) - g(s)^2 \big( s(x_s, s) - \nabla_x \mathcal{E}(y, x, s) \big) \right] h + g(s)\sqrt{h}z$$

where $z \sim N(0, I)$ and N is the normal distribution. The expectation in $\varepsilon(y, x, s)$ is for example estimated by the Monte Carlo method of a single sample.

Figure 2 depicts a flow chart with steps of a first example of the method.

According to the first example, the digital image $x$ is generated in iterations with the diffusion model.

The digital image $x$ is in the example determined in iteration steps $t$. The input digital image $x_t$ of an iteration $t$ is a digital image $x_{t-1}$ that is determined in the iteration $x_{t-1}$ preceding iteration $x_t$. The digital image $x$ in the example is the digital image $x_t$ of a last iteration $t$.

According to the first example, the method controls the illumination of the digital image $x$ that is generated with the diffusion model.

According to the first example, the method comprises a step 202.

The step 202 comprises providing target illumination properties that comprise the target brightnesses of pixels of the digital image $x$.

According to an example, the target illumination properties are provided by parameterizing an illumination map as a composition of $N$ two-dimensional Gaussian functions $G$ as:

$$y_s = \sum_{i=1}^{N} \alpha_i G(\mu_i, \Sigma_i)$$

wherein the mean $\mu_i$ represents the position of the light source for the visible lights source or the location of the brightest parts of the digital image $x$ for the invisible light source, and wherein the co-variance matrix $\Sigma_i$ describes the spread and directionality of the light. $\alpha_i$ is the wight of the corresponding Gaussian, which, for example, is subject to $\Sigma\alpha_i = 1$.

According to the first example, the method comprises a step 204.

The step 204 comprises determining the digital image $x$ that optimizes a first similarity metric $S_I(y_s, x_t, t)$. In the example, the first similarity metric $S_I(y_s, x_t, t)$ is differentiable.

The digital image $x$ is in the example determined depending on the first similarity metric $S_I(y_s, x_t, t)$ in iteration steps $t$.

According to an example, the first similarity metric $S_I(y_s, x_t, t)$ quantifies a difference between the target illumination properties $y_s$ and illumination properties $f_s(x_t)$ of the digital image $x_t$.

In the example, the method comprises determining the digital image $x$ that minimizes the first similarity metric $S_I(y_s, x_t, t)$.

The first similarity metric $S_I(y_s, x_t, t)$ depends on the target illumination properties $y_s$ and on the illumination properties $f_s(x_t)$.

The illumination properties $f_s(x_t)$ comprise the brightnesses of the pixels of a digital image $x_t$.

The illumination properties $f_s(x_t)$ for a digital image $x_t$ having three color channels, e.g., red, r, green, $g$, blue, $b$, comprise for example the estimated lighting at pixel $m_t$, $n_t$ at a given iteration step $t$:

$$f_s(x_t) = f_s(m_t, n_t) = \sum_{r,g,b} \sum_{k=1}^{N} w_k \left( \frac{1}{2\pi\sigma_k^2} \right) e^{-\frac{t^2+j^2}{2\sigma_k^2}} * x_t(m_t, n_t)$$

wherein $\{i,j\}$ represents the position of the Gaussian center, $\sigma_k$ is the standard deviation for the $k$-th scale, and * denotes the convolution.

The method is neither limited to three color channels, nor to the colors red, green, blue. Other colors and more or less than three color channels may be used alike, e.g., by adjusting the outer sum according to the channels.

This means, digital images with more or less than three color channels may be processed, or less than all of the available color channels of a digital image may be processed.

According to an example the first similarity metric $S_I(y_s, x_t, t)$ comprises, pixel-wise differences between the illumination properties $f_s(x_t)$ and the target illumination properties $y_s$. In the example the pixel-wise mean square error is used to calculate the difference at iteration $t$:

$$S_I(y_s, x_t, t) = \sum_{(m_t, n_t) \in x_t} \| f_s(x_t) - y_s \|_2$$

Figure 3 depicts a flow chart with steps of a second example of the method for controlling the illumination.

According to the second example, the method controls the illumination and the geometry of the digital image $x$ that is generated with the diffusion model.

According to the second example, the method comprises a step 302.

The step 302 comprises providing the target illumination properties $y_s$ and target geometry properties $y_c$.

According to an example, target geometry properties $y_c$ are provided

According to the second example, the method comprises a step 304.

The step 304 comprises determining the digital image $x$ that optimizes the first similarity metric $S_I(y_s, x_t, t)$ and a second similarity metric $S_R(y_c, x_t, t)$. In the example, the second similarity metric $S_R(y_c, x_t, t)$ is differentiable.

The digital image $x$ is in the example determined depending on the first similarity metric $S_I(y_s, x_t, t)$ and the second similarity metric $S_R(y_c, x_t, t)$ in iteration steps $t$.

According to an example, the second similarity metric $S_R(y_c, x_t, t)$ quantifies a difference between the target geometry properties $y_c$ and geometry properties $f_c(x_t)$ of the digital image $x_t$.

In the example, the method comprises determining the digital image $x$ that minimizes the sum of the first similarity metric $S_I(y_s, x_t, t)$ and second similarity metric $S_R(y_c, x_t, t)$.

The second similarity metric $S_R(y_c, x_t, t)$ depends on the target geometry properties $y_c$ and on the geometry properties $f_c(x_t)$.

The geometry properties $f_c(x_t)$ comprise cross color ratio of the pixels of a digital image $x_t$.

According to an example, the target geometry properties $y_c$ and the geometry properties $f_c(x_t)$ for the digital image $x_t$ having the three color channels, e.g., red, $r$, green, $g$, blue, $b$, are determined for different combinations of channels and pairs of pixels of the digital image $x_t$.

This is described by way of example of a first color channel R, a second color channel G, a third color channel B. The method is neither limited to three color channels nor to the colors red, green, blue. The cross color ratio may be determined for two color channels, more or more than three color channels.

According to an example, the cross color ratio is determined for neighboring pixels only. A pixel is a neighbor of another pixel in case the pixels are adjacent.

The cross color ratio is described for an exemplary pair of pixels that comprises a first pixel $p_1$ and a second pixel $p_2$ of the digital image $x_t$.

For the combination of the first color channel R and the second color channel G, the cross color ratio for the pair comprises, the product $M_{RG} = \dfrac{R_{p1} G_{p2}}{R_{p2} G_{p1}}$ of a ratio $\dfrac{R_{p1}}{R_{p2}}$ of the intensity of the color of the first pixel $p_1$ in the first color channel R and the intensity of the color of the second pixel $p_2$ in the first color channel R, with a ratio $\dfrac{G_{p2}}{G_{p1}}$ of the intensity of the color of the first pixel $p_1$ in the second color channel G and the intensity of the color of the second pixel $p_2$ in the second color channel G.

The cross color ratio for the combination of the first color channel R and the third color channel B is:

$$M_{RB} = \frac{R_{p1} B_{p2}}{R_{p2} B_{p1}}$$

The cross color ratio for the combination of the second color channel G and the third color channel B is:

$$M_{GB} = \frac{G_{p1} B_{p2}}{G_{p2} B_{p1}}$$

In this context, for the original digital image $x_0 \in \mathbb{R}^{H \times W \times 3}$ a cross color ratio matrix $C_{x_0} \in \mathbb{R}^{H \times W \times 3}$ of the original digital image $x_0$ with three color channels is

$$C_{x_0} = [M_{RG}, M_{RB}, M_{GB}]$$

wherein $H \times W$ represents the height H and the width W of the original digital image $x_0$.

In this context, the cross color ratio matrix of the generated digital image $x_t$ at step $t$ is

$$C_{x_t} = f_c(x_t)$$

According to an example the second similarity metric $S_R(y_c, x_t, t)$ comprises pixel-wise differences between the geometry properties $f_c(x_t)$ and the target geometry properties $y_c$. In the example the pixel-wise mean square error is used to calculate the difference at iteration $t$:

$$S_R(y_c, x_t, t) = \sum_{(m_t, n_t) \in x_t} \|f_c(x_t) - y_c\|_2$$

The method for example comprises manipulating an input digital image or an input digital image of a video. The method for example comprises a correction of the input digital image, e.g., an illumination correction.

For enhancing a training data set, the method according to the first example comprises providing a set of different target illumination properties $y_s$, and generating different digital images with different target illumination properties $y_s$ from the set.

For enhancing a training data set, the method according to the second example additionally comprises providing a set of different target geometry properties $y_c$, and generating different digital images with different target geometry properties $y_c$ from the set.

## Claims

1. A method for controlling an illumination in a digital image, in particular for enhancing a training data set, **characterized in that** the method comprises providing (202, 302) target illumination properties that comprise the target brightnesses of pixels of the digital image, determining (204, 304) the digital image that optimizes a first similarity metric that depends on the target illumination properties and on illumination properties that comprise the brightnesses of the pixels of the digital image.

2. The method according to claim 1, **characterized in that** the first similarity metric comprises pixel-wise differences between the illumination properties and the target illumination properties, and wherein determining (204, 304) the digital image that optimizes the first similarity metric comprises determining the digital image that minimizes the sum of the pixel-wise differences.

3. The method according to one of the preceding claims, **characterized in that** the digital image comprises a first color channel and a second color channel, wherein the method comprises providing (302) target geometry properties that comprise a target cross color ratio for the combination of the first color channel and the second color channel for a pair of pixels of the digital image, determining (302) the digital image that optimizes a second similarity metric that depends on the target geometry properties and on geometry properties that comprise a cross color ratio for the combination of the first color channel and the second color channel of the digital image for the pair.

4. The method according to claim 3, **characterized in that** the pair comprises a first pixel and a second pixel, wherein the cross color ratio for the pair comprises, the product of a ratio of the intensity of the color of the first pixel in the first color channel and the intensity of the color of the second pixel in the first color channel, with a ratio of the intensity of the color of the first pixel in the second color channel and the intensity of the color of the second pixel in the second color channel.

**5.** The method according to one of the claims 3 or 4, **characterized in that** the second similarity metric comprises pixel-wise differences between the geometry properties and the target geometry properties of a plurality of pairs of pixels of the digital image, and wherein determining (304) the digital image that optimizes the second similarity metric comprises determining the digital image that minimizes the sum of the pixel-wise differences of the second similarity metric.

**6.** The method according to one of the claims 3 to 5, **characterized in that** the target geometry properties and the geometry properties comprise the cross color ratios only for pairs of neighboring pixels of the digital image.

**7.** The method according to one of the claims 3 to 6, **characterized in that** the digital image comprises the first color channel, the second color channel, and a third color channel, wherein the target geometry properties and the geometry properties comprise the cross color ratios for the combination of the first color channel and the third color channel, and the combination of the second color channel and the third color channel.

**8.** The method according to one of the claims 3 to 7, **characterized in that** for enhancing the training data set, the method comprises providing a set of different target geometry properties, and generating different digital images with different target geometry properties from the set.

**9.** The method according to one of the preceding claims, **characterized in that** for enhancing the training data set, the method comprises providing a set of different target illumination properties, and generating different digital images with different target illumination properties from the set.

**10.** A device (100) for controlling an illumination in a digital image, in particular for enhancing a training data set, **characterized in that** the device (100) comprises at least one processor (102) and at least one storage (104), wherein the at least one storage (104) stores instructions that are executable by the at least one processor (102), and that, when executed by the at least one processor (102), cause the device (100) to execute the method according to one of the claims 1 to 9.

**11.** A computer program for controlling an illumination in a digital image, **characterized in that** the computer program comprises computer readable instructions that, when executed by a computer, cause the computer to execute the method according to one of the claims 1 to 9.

**Amended claims in accordance with Rule 137(2) EPC.**

**1.** A computer-implemented method for controlling an illumination in a digital image, wherein the method comprises providing (202, 302) target illumination properties that comprise the target brightnesses of pixels of the digital image, determining (204, 304) the digital image that optimizes a first similarity metric that depends on the target illumination properties and on illumination properties that comprise the brightnesses of the pixels of the digital image, **characterized in that** the digital image comprises a first color channel and a second color channel, wherein the method comprises providing (302) target geometry properties that comprise a target cross color ratio for the combination of the first color channel and the second color channel for a pair of pixels of the digital image, determining (302) the digital image that optimizes a second similarity metric that depends on the target geometry properties and on geometry properties that comprise a cross color ratio for the combination of the first color channel and the second color channel of the digital image for the pair, wherein the cross color ratio for the pair comprises, the product of a ratio of the intensity of the color of the first pixel in the first color channel and the intensity of the color of the second pixel in the first color channel, with a ratio of the intensity of the color of the first pixel in the second color channel and the intensity of the color of the second pixel in the second color channel.

**2.** The method according to claim 1, **characterized in that** the first similarity metric comprises pixel-wise differences between the illumination properties and the target illumination properties, and wherein determining (204, 304) the digital image that optimizes the first similarity metric comprises determining the digital image that minimizes the sum of the pixel-wise differences.

**3.** The method according to one of the claims 1 or 2, **characterized in that** the second similarity metric comprises pixel-wise differences between the geometry properties and the target geometry properties of a plurality of pairs of pixels of the digital image, and wherein determining (304) the digital image that optimizes the second similarity metric comprises determining the digital image that minimizes the sum of the pixel-wise differences of the second similarity metric.

4.  The method according to one of the claims 1 to 3, **characterized in that** the target geometry properties and the geometry properties comprise the cross color ratios only for pairs of neighboring pixels of the digital image.

5.  The method according to one of the claims 1 to 4, **characterized in that** the digital image comprises the first color channel, the second color channel, and a third color channel, wherein the target geometry properties and the geometry properties comprise the cross color ratios for the combination of the first color channel and the third color channel, and the combination of the second color channel and the third color channel.

6.  The method according to one of the claims 1 to 5, **characterized in that** for enhancing the training data set, the method comprises providing a set of different target geometry properties, and generating different digital images with different target geometry properties from the set.

7.  The method according to one of the preceding claims, **characterized in that** for enhancing the training data set, the method comprises providing a set of different target illumination properties, and generating different digital images with different target illumination properties from the set.

8.  A device (100) for controlling an illumination in a digital image, **characterized in that** the device (100) comprises at least one processor (102) and at least one storage (104), wherein the at least one storage (104) stores instructions that are executable by the at least one processor (102), and that, when executed by the at least one processor (102), cause the device (100) to execute the method according to one of the claims 1 to 7.

9.  A computer program for controlling an illumination in a digital image, **characterized in that** the computer program comprises computer readable instructions that, when executed by a computer, cause the computer to execute the method according to one of the claims 1 to 7.

**Fig. 1**

**Fig. 2**

**Fig. 3**

Europäisches
Patentamt
European
Patent Office
Office européen
des brevets

## EUROPEAN SEARCH REPORT

Application Number

EP 24 16 9747

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FUTSCHIK DAVID ET AL: "Controllable Light Diffusion for Portraits", 2023 IEEE/CVF CONFERENCE ON COMPUTER VISION AND PATTERN RECOGNITION (CVPR), IEEE, 17 June 2023 (2023-06-17), pages 8412-8421, XP034402421, DOI: 10.1109/CVPR52729.2023.00813 [retrieved on 2023-08-22] | 1,2,9-11 | INV. G06T11/00 |
| A | * abstract * <br> * sect. 1, 3.1, 3.2, 3.3, 4.3 * | 3-8 | |
| X | RUDNEV VIKTOR ET AL: "NeRF for Outdoor Scene Relighting", 1 January 2022 (2022-01-01), SPRINGER INTERNATIONAL PUBLISHING, PAGE(S) 615 - 631, XP047637006, | 1,2,10, 11 | |
| A | * abstract * <br> * figure 2 * <br> * sect. 3.4 * | 3-9 | |
| A | GEVERS T ET AL: "Color-based object recognition", PATTERN RECOGNITION, ELSEVIER, GB, vol. 32, no. 3, 1 March 1999 (1999-03-01), pages 453-464, XP004157212, ISSN: 0031-3203, DOI: 10.1016/S0031-3203(98)00036-3 * abstract * <br> * sect. 4.2 * | 1-11 | TECHNICAL FIELDS SEARCHED (IPC) <br><br> G06T |
| T | XIAOYAN XING ET AL: "Retinex-Diffusion: On Controlling Illumination Conditions in Diffusion Models via Retinex Theory", ARXIV.ORG, CORNELL UNIVERSITY LIBRARY, 201 OLIN LIBRARY CORNELL UNIVERSITY ITHACA, NY 14853, 29 July 2024 (2024-07-29), XP091835299, * the whole document * | | |

The present search report has been drawn up for all claims

| Place of search | Date of completion of the search | Examiner |
|---|---|---|
| Munich | 12 September 2024 | Scholz, Volker |

EPO FORM 1503 03.82 (P04C01)